**Europäisches Patentamt**

(19) **European Patent Office**

**Office européen des brevets**

(11) Veröffentlichungsnummer: **0 245 628**
A2

(12) **EUROPÄISCHE PATENTANMELDUNG**

(21) Anmeldenummer: **87104543.1**

(22) Anmeldetag: **27.03.87**

(51) Int. Cl.³: **A 61 C 17/02**

(30) Priorität: **15.05.86 DE 3616401**

(43) Veröffentlichungstag der Anmeldung:
**19.11.87** Patentblatt **87/47**

(84) Benannte Vertragsstaaten:
**AT BE CH DE ES FR GB GR IT LI LU NL SE**

(71) Anmelder: **Petz, Günter**
**Flachslander Strasse 8**
**D-8500 Nürnberg(DE)**

(72) Erfinder: **Petz, Günter**
**Flachslander Strasse 8**
**D-8500 Nürnberg(DE)**

(74) Vertreter: **Göbel, Matthias, Dipl.-Ing.**
**Pruppacher Hauptstrasse 5-7**
**D-8501 Pyrbaum-Pruppach(DE)**

(54) **Munddusche.**

(57) Bei einer Munddusche mit einem am Handstück angeordneten Düsenrohr für den Flüssigkeitsaustritt ist zum
sicheren Ablösen von Ablagerungen und Verunreinigungen
auf das Düsenrohr (5) ein Bürstenkörper (9) fest oder lösbar
fest angeordnet und der Bürstenkörper (9) durch die austretende Flüssigkeit drehbar.

Fig.1

EP 0 245 628 A2

Beschreibung

Mundusche

Die Erfindung betrifft eine Mundusche mit einem am Handstück angeordneten Düsenrohr für den Flüssigkeitsaustritt.

Bekannterweise dient bei Mundduschen der mit hohem Druck austretende Flüssigkeitsstrahl der Reinigung von Zahnfleisch und Zähnen von Verunreinigungen bzw. Ablagerungen. Durch den Aufprall des Flüssigkeitsstrahls auf Zahnfleisch und Zähne werden Verunreinigungen bzw. Ablagerungen zunächst abgelöst und durch die abfließenden Flüssigkeitsteilchen nachfolgend ausgetragen. Es hat sich gezeigt, daß die Aufprallkraft des Flüssigkeitsstrahls vielfach nicht ausreicht, besonders festsitzende Ablagerungen und Verunreinigungen zu lösen. Auch ist der Flüssigkeitsstrahl infolge seiner hohen Austrittsgeschwindigkeit am Düsenrohr ungeeignet, z.B. medizinische Mittel wie Pasten auf Zahnfleisch und Zähne aufzubringen oder nachhaltig zu verteilen.

Die Erfindung hat zur Aufgabe, bei Mundduschen der eingangs genannten Art das Ablösen von Ablagerungen und Verunreinigungen sicherer zu machen.

Der Erfindung gemäß ist dies dadurch erreicht, daß auf das Düsenrohr ein Bürstenkörper fest oder lösbar fest angeordnet ist und daß der Bürstenkörper durch

2

die austretende Flüssigkeit drehbar ist. Hierzu kann der Bürstenkörper mit der Welle eines durch die austretende Flüssigkeit drehbaren Rades verbunden sein, das in einem auf das Düsenrohr angeordneten Gehäuse angeordnet ist. Die Munddusche kann so wahlweise bei ausschließlicher Verwendung des Düsenrohrs als hydraulisch wirkendes Duschgerät für Zahnfleisch und Zähne oder in Verbindung mit dem Bürstenkörper als mechanisch hydraulisches Reinigungsgerät zum Einsatz gebracht werden. Bei letztgenanntem Einsatz dient der Flüssigkeitsstrahl zunächst als Antriebsmittel von Flüssigkeitsrad und Bürstenkörper und nachfolgend nach Abgabe oder Aufbrauch seiner kinetischen Energie als Transportmittel für die abgelösten Verunreinigungsteilchen.

In Ausgestaltung der Munddusche ist vorgesehen, auf das Düsenrohr eine Wasserturbine aufzustecken, deren Laufwelle den Bürstenkörper fest trägt. Es versteht sich, daß die Wasserturbine auch einstückig mit dem Düsenrohr ausgeführt sein kann. Auch ist möglich, daß das Düsenrohr ein in einem auf dieses aufsteckbaren Gehäuse drehbares Flügelrad trägt, auf dessen Welle der Bürstenkörper angeordnet ist.

Schließlich ist noch vorgesehen, daß das Aufnahmegehäuse für das Flügel- oder das Laufrad mindestens eine dem Bürstenkörper zugeordnete Durchtrittsöffnung für die austretende Flüssigkeit aufweist. Die lichte Weite der Durchtrittsöffnung ist dabei so gewählt, daß ein Rückstau der Austrittsflüssigkeit und Rückwirkungen

3

auf das Antriebsrad des Bürstenkörpers vermieden sind. Schließlich sieht die Erfindung noch vor, beliebig Bürstenkörper mit rundem Querschnitt zu verwenden, die in der Art eines Pinselkopfes ausgebildet sein können. Die Borsten des Bürstenkörpers können mit gleichen oder verschiedenen Längen ausgebildet bzw. gleich oder verschiedenen Härten ausgeführt sein. Durch einfaches Austauschen des Bürstenkörpers, der von seiner Antriebswelle abnehmbar ist, kann eine exakte Anpassung der Munddusche an den Verunreinigungsgrad erreicht werden.

Die Erfindung ist anhand von Ausführungsbeispielen in der Zeichnung verdeutlicht. Es zeigen:

Fig. 1    ein Handstück einer Munddusche teilweise im Schnitt,

Fig. 2    ein Teilstück eines Düsenrohrs,

Fig. 3    einen Teilschnitt eines Düsenrohrs,

Fig. 4    ein Teilstück eines Düsenrohrs, gemäß Fig. 3 in Vorderansicht und

Fig. 5    ein Düsenrohr in Seitenansicht.

In den Fig. ist mit 1 ein Handstück einer Munddusche bezeichnet, das über ein flexibles Rohr 2 mit der Mundduschenpumpe in Verbindung steht. Die Mundduschenpumpe ist hierzu im Mundduschengehäuse (nicht gezeigt) untergebracht und durch einen Elektromotor antreibbar. Mit 3 ist ein Steuerglied für ein den Flüssigkeitsaustritt über eine Bohrung 4 kontrollierendes Ventil bezeichnet. Durch Öffnen des Ventils kann bei Antreiben der Mundduschenpumpe Flüssigkeit über die Bohrung 4 am freien Ende des Düsenrohrs 5 frei austreten.

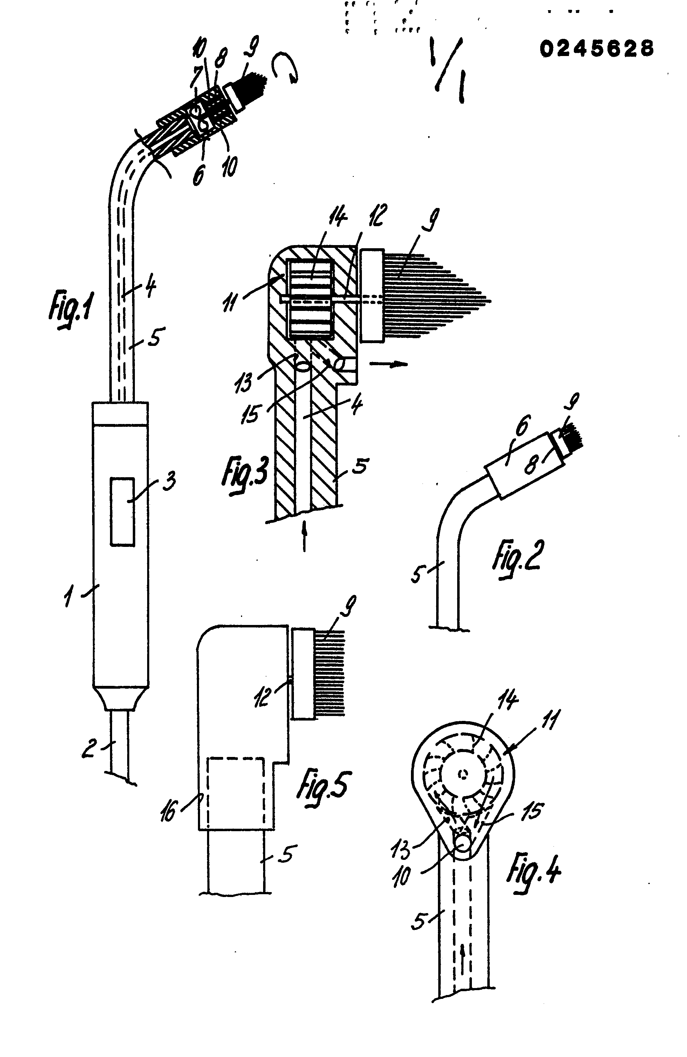

Beim Ausführungsbeispiel ist auf das freie Ende des Düsenrohrs 5 ein Gehäuse 6 aufgesteckt, das ein Flügelrad 7 drehbar aufnimmt, dessen Welle 8 einen Bürstenkörper 9 trägt. Weiter sind im Gehäuse 6 Flüssigkeitsdurchtrittsbohrungen 10 vorgesehen. Durch Öffnen des Ventils trifft der austretende Flüssigkeitsstrahl auf das Flügerad 7 und dreht dieses unter Mitnahme des Bürstenkörpers 9. Die beim Antreiben des Flügelrades 7 von der kinetischen Energie befreite Flüssigkeit fließt über die Bohrungen 10 ab und bewirkt in der Mundhöhle des Benutzers den Abtransport der gelösten Verunreinigungen. Es versteht sich, daß das Gehäuse 6 mit Flügelrad 7 und Bürstenkörper 9 auch fest am Düsenrohr ausgebildet sein können (Fig. 2). Für die Benutzer der Munddusche besteht die Möglichkeit, durch den Austausch von Düsenrohren beliebig entweder den alleinigen Austritt eines Flüssigkeitsstrahls bzw. den Antrieb eines Bürstenkörpers 9 mit gleichzeitigem Abfluß von Flüssigkeit zu bewirken.

Beim Ausführungsbeispiel der Fig. 3 - 5 nimmt das Düsenrohr 5 ein zylindrisches Laufrad 11 auf, das mittels einer Welle 12 gelagert ist. Die Welle 12 trägt einen Bürstenkörper 9, so daß bei Drehbewegungen des Laufrades 11 der Bürstenkörper rotiert.

Beim Ausführungsbeispiel der Fig. 3 und 4 wird die Flüssigkeit über eine Bohrung 13 auf die Schaufeln 14 des Laufrades 11 aufgespritzt, wodurch dieses ein Drehmoment erhält. Die vom Laufrad 11 abfließende Flüssigkeit gelangt über eine Bohrung 15 und der Austritts-

5

bohrung 10 unterhalb des Bürstenkörpers 9 ins Freie. Von dort gelangt die Flüssigkeit in den Mund des Benutzers zum Abtransport gelöster Verunreinigungen. Abweichend ist in Fig. 5 das Laufrad in einem Gehäuse 16 untergebracht, das auf das freie Ende des Düsenrohrs 5 aufsteckbar ist. Die Laufradwelle 12 trägt einen Bürstenkörper 9.

Die Form des Bürstenkörpers 9 kann beliebig gestaltet sein, sie kann kegelig oder zylindrisch bzw. mit beliebigem Rotationsquerschnitt ausgeführt sein. Das Maßgebliche der Erfindung wird darin gesehen, den Flüssigkeitsstrahl bei Mundduschen gleichzeitig zum Antrieb eines Reinigungskörpers zu nutzen.

1

Patentansprüche:

1. Munddusche mit einem am Handstück angeordneten
Düsenrohr für den Flüssigkeitsaustritt, dadurch gekennzeichnet, daß auf das Düsenrohr (5) ein Bürstenkörper (9) fest oder lösbar fest angeordnet ist und
daß der Bürstenkörper (9) durch austretende Flüssigkeit drehbar ist.

2. Munddusche nach Anspruch 1, dadurch gekennzeichnet,
daß der Bürstenkörper (9) mit der Welle (8) eines durch
die austretende Flüssigkeit drehbaren Rades verbunden
ist, das in einem auf das Düsenrohr (5) ausgebildeten
Gehäuse angeordnet ist.

3. Munddusche nach Anspruch 1 und 2, dadurch gekennzeichnet, daß auf das Düsenrohr (5) eine Wasserturbine
aufsteckbar ist, deren Laufradwelle (12) den Bürstenkörper (9) fest trägt.

4. Munddusche nach Anspruch 1 und 2, dadurch gekennzeichnet, daß das Düsenrohr (5) ein in einem auf dieses aufsteckbaren Gehäuse drehbares Flügelrad (7) trägt
auf dessen Welle (8) der Bürstenkörper (9) angeordnet
ist.

5. Munddusche nach Anspruch 3 und 4, dadurch gekennzeichnet, daß das Aufnahmegehäuse für das Flügel- (7)
oder Laufrad (11) mindestens eine dem Bürstenkörper
(9) zugeordnete Durchtrittsöffnung (10) für austretende
Flüssigkeit aufweist.

2

6. Munddusche nach Anspruch 1, dadurch gekennzeichnet, daß der Bürstenkörper (9) mit rundem Querschnitt ausgebildet ist.

7. Munddusche nach Anspruch 1 und 6, dadurch gekennzeichnet, daß die Borsten des Bürstenkörpers (9) mit gleichen oder verschiedenen Längen ausgebildet bzw. gleichen oder verschiedenen Härten ausgeführt sind.

0245628

1/1

Fig.1

Fig.2

Fig.3

Fig.4

Fig.5